# EUROPEAN PATENT APPLICATION

(11) **EP 1 225 382 A2**
(43) Date of publication of application: **24.07.2002**
(21) Application number: 02075224.2
(22) Date of filing: 18.01.2002
(51) Int. Cl.: F16L 21/04, F16L 37/084

(54) **Pipe joint**

(30) Priority: 22.01.2001 BE 200100051
(71) Applicant: Deneire, Michel, 8850 Ardoie (BE)
(72) Inventor: Deneire, Michel, 8850 Ardoie (BE)
(74) Representative: Ryckeboer, Leo, Ir.

(57) **Abstract**

The invention relates to a pipe joint, easy to assemble and dismount, for connecting two pipe ends in a sealing manner; as well as to coupling methods and pre-assembled pipe joints for that purpose. The pipe joint includes a sealing ring (3) of an elastic material, and at least one clasping ring (5, 6) situated close to this sealing ring; the clasping ring being axially movable to lock and unlock the connection. The pipe joint further includes means that enclose the sealing ring and clasping ring in joint condition: a tubular sleeve (7) and on both sides of the sealing ring (3) a spring washer (12) with adjacent auxiliary rings (13). The washer ring (12) is axially compressible to ensure a tight locking and displays a smaller inner diameter when compressed than when not compressed.

## Description

The invention relates to a pipe joint for connecting two pipe ends in a sealing way, as well as to coupling methods and pipelines coupled in this manner.

It is known to seal two juxtaposed pipe ends by applying a compressible sealing ring overlapping both pipes at the annular junction in between them. Around this ring, a cylindrical sleeve is placed consisting of two or more cylindrically bent plate segments that connect with each other, as for instance described in US patent 3 423 111. At their top edges, these sleeve segments have flanges that extend inwards in a radial way, thereby enclosing the top edges of the compressible sealing ring. By pressing these segments radially inwards by means of enclosing clasping rings against the underlying sleeve segments and sealing ring, the afore-mentioned flanges exert through their construction an axial pressure on the top edges of the sealing ring. A disadvantage of this system is the need for an extra outer clasping ring.

It is also known to exert an axial pressure on or near the end faces of the sealing rings by means of two fitting cylindrical socket parts, each other's mirror image, axially screwed towards one another on e.g. an intermediary ring as described in GB patent 836 002, this for the benefit of a leak proof closure of pipe joints. Similar systems are known from the patents GB 1 530 749 and US 1 857 297. However, construction of these coupling systems is rather complex.

The present invention aims at providing simpler pipe joints that additionally may fairly easily be mounted and dismounted. The exterior part of the pipe joint simply consists of a tube, preferably made in one piece. This tube or sleeve extends around the compressible sealing ring facing the annular junction. The sealing coupling in accordance with this invention is in certain embodiments fit for use under atmospheric pressure and is furthermore in other embodiments fit for pipelines that are under overpressure or under vacuum, under slight underpressure as well as under fluctuating pressure conditions.

In particular, according to this invention the pipe joint or coupling consists of a sealing ring from an elastic material, with an inner diameter substantially equal to the outer diameter of the pipe ends to be joined. This sealing ring faces with the annular junction in between the end faces of afore-mentioned pipe ends that have to be coupled, thereby overlapping both pipe ends. The pipe joint or coupling furthermore comprises at least one axially moveable clasping ring, situated near the sealing ring. The term "axially moveable" is used here not only as "exclusively" axial or axial in a straight line, but in the meaning of being movable according to a trajectory which consists of at least one axial component next to possibly - and even preferably - other, crosswise directed components. The clasping rings preferably have the same or practically the same inner and outer diameter as the sealing ring. These clasping rings serve to lock and unlock the sealing pipe joint as described below. Finally, the pipe joint comprises means to surround, in particular to enclose, the sealing and clasping ring when coupled.

In accordance with a feature of the invention, these enclosing means comprise a tubular sleeve, preferably made in one piece. Another important characteristic is the presence of a spring washer with optional adjoining auxiliary rings. This washer is axially compressible, i.e. perpendicular to the plane of the ring, to secure a tight locking. In compressed condition, the washer has a smaller inner diameter than when in relaxed, non-compressed condition. Exactly this feature produces the simple clasping pipe joint as will be elucidated further on. It improves indeed the grasp and clasping of the pipe coupling on the pipe ends to be coupled against shifting in axial direction. The spring washer is especially important for applications under non-atmospheric pressure.

One preferred embodiment has a tubular sleeve in one piece that lies with its inner wall directly against the outer wall of the clasping rings and the sealing ring. In another preferred embodiment, the sleeve is not immediately placed against said rings, but two or more complementary tubular segments are inserted in between the afore-mentioned sleeve and the rings.

The invention also relates to a process or method for a swift assembly and dismounting of the pipe joint. In the process, as a first step the sleeve is preferably assembled in advance, after which it is applied around the pipe ends to be coupled and locked onto it. The invention therefore also relates to these pre-assembled pipe joints and to pipelines provided with one or more pipe joints.

On the basis of the appended figures, a number of possible embodiments and methods for their assembly and dismounting will now be described. Additional advantageous details of the invention will meanwhile be discussed, i.e. concerning the spring washers and the pre-assembled pipe joints.
Figure 1 is a schematic view of a preferred embodiment of the pipe joint with the various coupling elements in their position just before the final assembly step. The one-piece sleeve is directly adjacent to the outer wall of the sealing and clasping rings.
Figure 2 is a cross-section of the pipe joint at line II-II from figure 1; illustrating the locking of the protrusions in the matching slots in the sleeve wall.
Figure 3 shows a detail of the mounted pipe joint level with the spring washer according to a preferred embodiment and just before clamping the sleeve.
Figure 4 is an outline in perspective of a preferred embodiment of the spring washer.
Figure 5 is a schematic representation of a mounted and under pressure clamped pipe joint, with the protrusions situated at the inner wall of the sleeve. Here as well, the inner wall of the sleeve is directly adjacent to the outer wall of the sealing and clasping rings.
Figure 6 is a view from above of figure 5, showing the slot in the clasping ring for a matching protrusion.
Figure 7 is a perspective view of a cam spanner aimed at helping to lock the pipe joint by an appropriate angular rotation or wrench.
Figure 8 shows a tubular segment in perspective, that can be applied in another preferred embodiment where the external sleeve, made in one piece, is not immediately adjacent to the outer wall of the sealing and clasping rings.

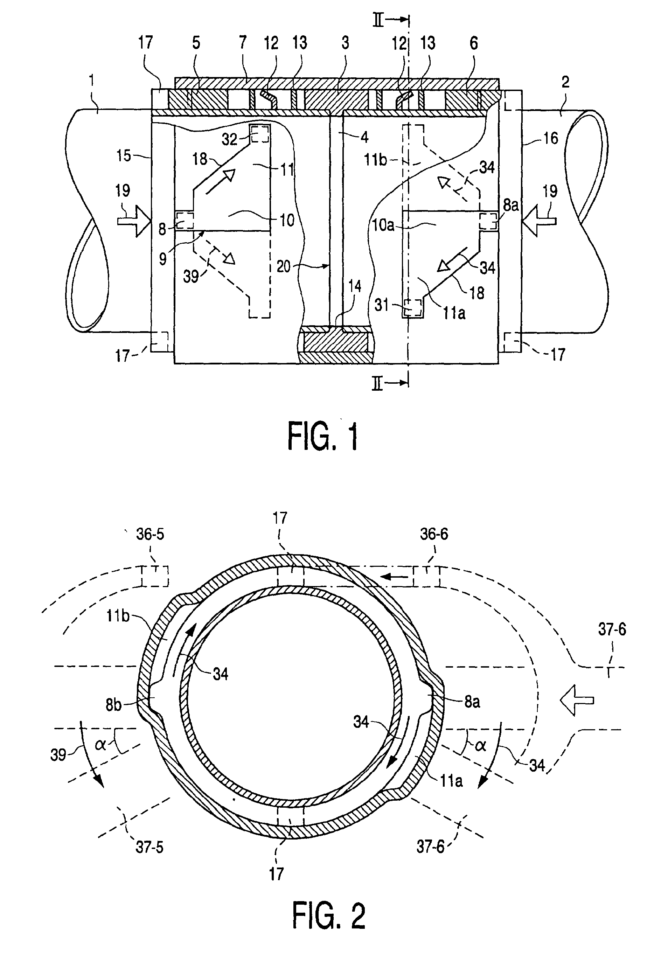

In the embodiment according to figures 1 and 2, two juxtaposed pipe ends 1 and 2 are coupled together in a sealing way. The pipe joint can be realised by placing the separate parts of the pipe joint one after the other in their correct order on the pipe ends and clamping them onto these. For example, clasping ring 5 will first be slid over pipe end 1, adjacent on to said clasping ring 5 washer 12 is slid with, when needed, auxiliary rings 13. The same happens mirror wise on pipe end 2: sliding clasping ring 6 first, adjacent to it washer 12 with, if needed, auxiliary rings 13. Sleeve 7 is slid over this, orientated in the appropriate angle for the protrusions 8 (8a, 8b) to be able to shove or insert into the matching notches 9 in sleeve 7. For that purpose, the notches or slots 9 contain a practically axially directed section 10, which stretches from the outer edge of the sleeve inwards, where a transversal contouring slot 11 connects. Preferably, diametrally facing protrusion 8a, there is a protrusion 8b, on clasping ring 5 as well as on clasping ring 6 as illustrated in figure 2. This protrusion 8b can then be shoved simultaneously in the symmetrically positioned slot 11b.
Next, the elastic sealing ring 3 is placed on pipe end 1 with the central inner rib 14 against its outer edge 20, i.e. in junction 4 in between the facing pipe ends 1 and 2. This central inner rib 4 guarantees an optimal and fixed positioning of the sealing ring 3 in order to obtain a reliable sealing. Then, pipe end 2 with its surrounding sleeve 7 and rings 6, 12 and 13 is slid against the as yet free accessible end of sealing ring 3 (from right to left on the figure), more exactly up against the inner rib 14. The sleeve 7 with rings 6, 12 and 13 is simultaneously slid (towards left) onto this pipe end 2 until these rings connect with each other and with the sealing ring 3. With it, the sleeve slides farther down over the sealing ring. Now, the rings 5, 12 and 13 on pipe end 1 will on their turn be slid towards the other outer edge of the sealing ring. To that end, the appropriate angle orientation is given to clasping ring 5 in order to make it possible for its protrusions 8 to shove into slots 9 near the opposite outer edge of sleeve 7, in particular in the axial slot sections 10, that have also been applied there to the inner wall of sleeve 7.
With pipes of a larger diameter, e.g. larger than 10 cm, three, four, or even more protrusions 8 may be placed symmetrically alongside the contour of the clasping rings, instead of two as shown in figure 2. It is obvious in this case that three or more matching slots 9 are equally provided in sleeve 7.

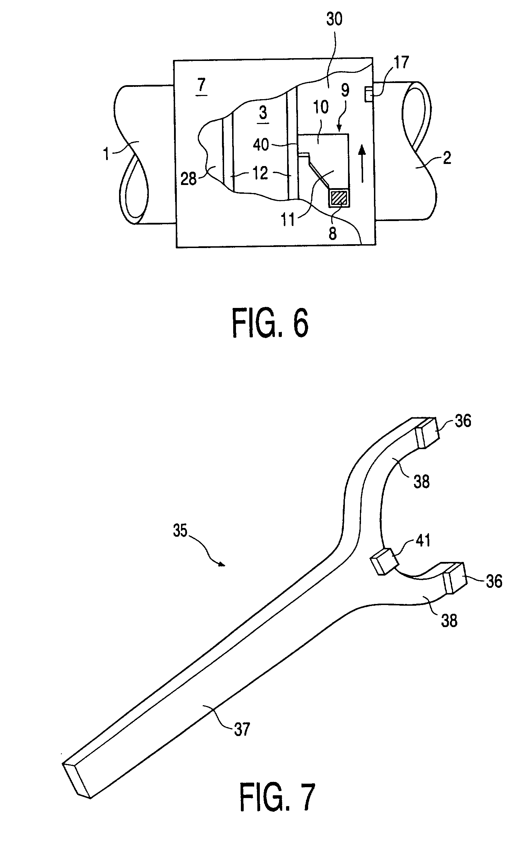

At this point, the pipe joint is nearly ready to be locked with protrusions 8 in the matching slots 9 by means of the adequate angular wrenches of the clasping rings 5, 6. As shown in figure 1, the protrusions 8 are situated in the matching axial sections 10 (10a) of the slots 9. By turning both cam spanners in the direction of the arrows 19 a little towards each other, the protrusions slide axially inwards in the slots 10 and the rings 5, 12, 13, 3 and 6 move and shut more closely together around the pipe ends. The angular wrenches can now be realised with the cam spanners 35 shown in figure 7. The cam spanners have a handle 37 and two arms 38. At the end of each spanner arm 38, there is a protruding cam 36 appropriate for meshing into the two diametrally facing notches 17 on the outer edge 15, resp 16 of the clasping rings 5, resp 6. A cam spanner with only one protruding cam 41 suffices for clasping rings with only one notch 17. To secure the axial displacement, the outer edges 15, 16 of the respective clasping rings 5, 6 are provided with at least one local notch 17. The positioning of the cam spanners is also suggested by the dotted line in figure 2: a first cam spanner (35-5) with handle 37-5 on clasping ring 5 and a second cam spanner (35-6) with handle 37-6 on clasping ring 6. When the outer edge of the clasping rings 5, 6 contains four notches 17 alongside the contour at 90 ° from each other, then the cam spanners 35 can be equipped with a third cam 41.

The first cam spanner (35-6) with handle 37-6 and cams 36-6 can now be meshed into the notches 17 of clasping ring 6 and the second cam spanner (35-5) with handle 37-5 and cams 36-5 into those of the opposite clasping ring 5. By wrenching or rotating these in opposite direction over an angle alpha following arrows 34, 39, the respective protrusions 8 slid into the matching notches 9 to their final closure position 31, resp 32, according to a helical movement against the slanting edges 18 in the respective contour sections 11 of the slots 9. Actually, a kind of bayonet catch is achieved in which the axial movableness comprises a combined axial and transverse component, which results into a substantially helical displacement.

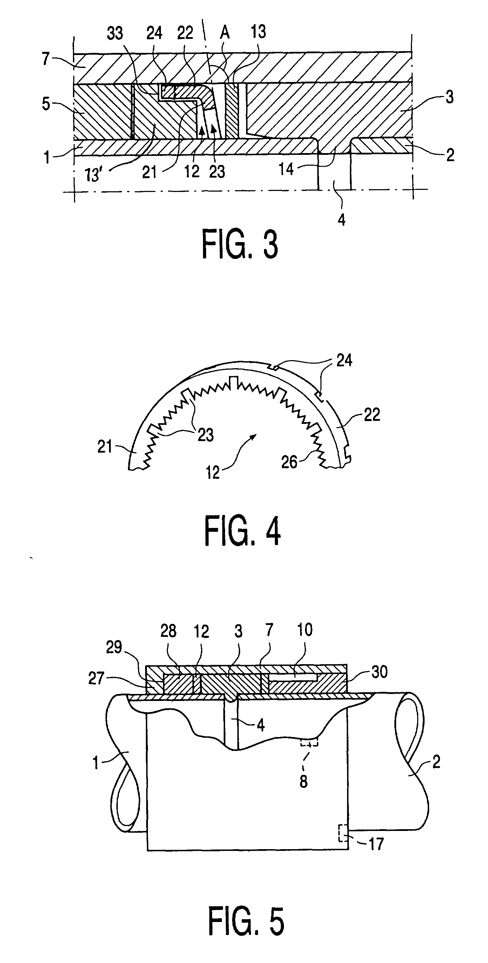

This angular rotation now brings about an axial pressure accumulation on the spring washers 12 as well as on the intermediary elastic sealing ring 3. The intended sealing closure of the joint is thus achieved. At the same time, a clamping effect on the pipe ends is realised by means of the spring washers 12, as will further on be explained when discussing figures 3 and 4.

To uncouple the pipes, the sleeve is reversibly turned back over the same angle alpha out of its closure position with the two spanners 35 (i.e. 35-5 and 35-6). The clasping rings 5 and 6 automatically shift back axially out of the notches 9 and out of the sleeve as a result of the releasing tendency of the spring washers 12 and the sealing ring 3. The sleeve 7 with one of the clasping rings can now be shoved away from over the sealing ring 3, which itself can be removed for cleaning or be replaced by a new sealing ring if desired. The elastic sealing ring can be made out of silicone rubber. This material offers the advantage of being very inert and of aging only very slowly. With certain applications, for instance the transportation of foods through pipes, one has to avoid for bacteria to cling some deposit on rib 14 in junction 4 in between the pipe ends in the course of time. These kinds of application necessitate a periodical maintenance of the pipe joint and sealing rings in order to clean or replace them. A swift assembly and dismantling is therefore an important asset for its use in the field.

Summarizing, in the pipe joint according to figures 1 and 2, the tubular sleeve lies with its inner wall directly against the outer wall of the clasping rings 5 and 6 and of the sealing ring 3. The axial movableness of the clasping rings is secured by a kind of helical turn of one or more protrusions 8 on the outer wall of the clasping rings 5 and 6 in the facing notches or slots 9 in the inner wall of the sleeve 7. The so-called helical turn is in this embodiment a bayonet catch in which the slot 9 possesses an almost axially directed section 10 which stretches from the outer edge of the sleeve inwards where it connects with a transversal contouring slot 11. In this way, the sleeve can always be moved unhindered in axial direction over the elastic sealing ring for assembly or dismantling.

The spring washers 12, as shown in figures 1, 3 and 4, are preferably made out of metal, e.g. stainless steel. They are axially (i.e. in the longitudinal direction of the pipes) compressible and have an inner diameter somewhat smaller in compressed condition than when not compressed. This is especially advantageous because their inner edge then firmly presses inwards on the outer walls of pipe ends 1 and 2 and outwards against the inner wall of the sleeve. This increases the clamping action in the pipe joint and moreover secures an electrically conducting contact between pipe ends 1 and 2 and the conducting, preferably metal sleeve 7 to divert if necessary electrostatic charges inside pipes 1 and 2 to the sleeve and to each other, which usually results into an earthing effect. Indeed, when transporting e.g. dry powder mixtures like flour, these tendencies for charging should be most carefully avoided.

A preferred version of the spring washer 12 is shown in section in figure 3, in its mounted but not yet clamped condition. The metal washer 12 contains an inner contour section 21 that is provided with mainly radially directed incisions 23 in its edge and an outer contour section 22 linking to it and forming an obtuse angle "A" with the inner section 21. The inner edge of the washer is preferably provided with a fine toothed indentation 26 as outlined in figure 4. The outer edge of the outer contour section 22 is preferably likewise provided with the appropriate radial incisions 24 and presses as such against an appropriate annular contour groove 33 in the opposite top edge of the clasping ring 5 itself or of an auxiliary ring 13'. With the axial pressing of the clasping rings onto the sealing ring, the contour section 21 of the sealing ring moves itself out of the sloping position under angle A to a virtually vertical position (A>91°) around the buckling or hinging sector where sections 21 and 22 connect with each other. The indentation 26 situated at the bottom edge bites its teeth as it were into the outer surface of the pipe end 1. In this way, the inner diameter of the washer ring diminishes and at the same time the clamping action and the bridge joint between sleeve 7 and pipe ends 1 resp 2 is increased. Exactly these radial incisions 23 in the inner contour section 21 allow the decrease of the inner diameter and they more or less close when the joint is clamped. At the same time, the incisions 24 in section 22 provide an equal distribution of the pressure accumulation in the washer ring and consequently an adequate deformation of this ring 12. The outer contour section 22 simultaneously presses firmly against, thus ensuring a sustained contact with, the inner wall of sleeve 7.

These washers 12 moreover offer the surprising additional advantage of allowing pipe ends that do not exactly have the same outer diameter (or that are not perfectly round) to be hermetically sealed and to be coupled tight. The contour section 21 of the washer ring will place itself under clamping pressure almost vertically with respect to the pipe end (or its contour zones) with the smallest diameter, whereas this section 21 of the washer ring near the pipe end (or its contour zones) with a somewhat larger diameter will maintain a certain slope. This offers a great practical advantage bearing in mind the considerable tolerances on diameters of industrially manufactured metal pipes.

According to the present invention, the protrusions 8 can be applied either on the inner wall of the sleeve as described above, or on the outer wall of the clasping ring as explained below.

In the embodiment according to figure 5 and 6, the same reference numbers are used for those parts with the same function as described above. At the same time two elements in these figures have been altered with respect to the previous embodiments. On the one hand, the protrusions 8 are situated on the inner wall of sleeve 7 (instead of on the outer wall of the clasping rings as in figures 1 and 2), and the matching slot 9 has been provided in the outer wall of the clasping ring 30. This slot 9 again has an axially directed part 10 and a transversally directed part 11 connecting to it. On the other hand, only one clasping ring 30 is equipped to realize a lock by means of slot 9 and matching protrusion 8. The other clasping ring 28 may have a continuous cylindrical outer surface, making its production more economic. Sleeve 7 on the other hand has on one of its ends a radially inwards-directed end flange 27 as abutment for the end face 29 of clasping ring 28.
Figures 5 and 6 show the coupling in locked (clamped) condition.

When mounting the pipe joint, the sleeve 7 first has to be slid over pipe end 1, and then respectively the clasping ring 28, a washer 12 with an auxiliary ring (not shown) and the sealing ring 3. On pipe end 2, we equally slide a washer 12 with auxiliary ring and clasping ring 30. Finally, this clasping ring 30 has to be slid into the space between the sleeve and the pipe end 2 under the correct angle in such a way that protrusion 8 slides into the axially directed slot part 10 of its outer wall. To lock the pipe joint under pressure, clasping ring 30 is rotated with a cam spanner 35 over an angle in such a way that protrusion 8 settles into the remote corner of the transversally directed slot part 11 (figure 6). In this embodiment, the axially directed section 10 of the slot stretches from the inner edge 40 of the clasping ring to the outside where the transversal contouring slot 11 crosswise connects.

It is of course possible for an embodiment with protrusions on the inner wall of the sleeve, to be equipped with two clasping rings 30, mirroring each other with regard to the junction 4, in analogy with the embodiment of figure 2. The sleeve will then be provided near both ends with symmetrically placed protrusions 8 on the inner wall. Conversely, it is possible to apply the embodiment having one clasping ring 5 with the appropriate protrusions 8 on its outer wall, in analogy with the principle shown in figure 5. Instead of each time applying two diametrally facing protrusions and matching slots 9 over the contours of the clasping rings and sleeve, it is also possible to apply only one (for small tubes) or, in a symmetrical position, to apply three or more of them for relatively large pipes, e.g. with a diameter larger than 15 cm.

Pipe ends 1 and 2 can be made out of metal (e.g. stainless steel or copper) or out of a synthetic or ceramic material, or out of a combination of afore-mentioned materials.
Their diameters can be chosen at random starting from 1 cm and (preferably) under 50 cm. The clasping rings are preferably made out of an engineering plastic such as polyacetal, but may equally be made out of e.g. brass or copper. The length of the sleeve 7 is preferably more than once and less than twice the diameter of the pipe ends to be joined. The sleeve 7 itself can be made out of metal or plastic material. The notches 9 (10, 11) in a metal sleeve may then have e.g. deep-drawn bulges in the pipe wall as suggested in figure 2. When sleeve 7 is made out of a plastic, the desired notches 9 in the inner wall can be made through injection moulding with adequate moulds. The outer wall of this sleeve is then usually completely cylindrical (i.e. without local protrusions). Moreover, this plastic sleeve can be covered on the exterior with a metal pipe.

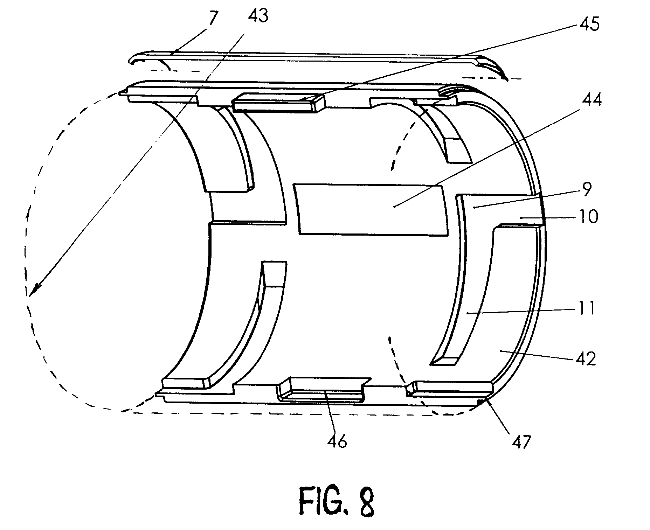

In accordance with the current invention, and as shown in figure 8, it is also possible to opt for the application of a sleeve 7 with a fully cylindrical outer surface - such as a metal sleeve - combined with clasping rings 5, 6 that have protrusions 8 on their exterior but where two (or more) complementary tubular segments 42, 43, e.g. out of plastic, are applied in between the inner wall of this sleeve 7 on the one hand and the exterior of the clasping rings and the sealing ring on the other hand. These segments have at their concave inner wall the adequate notches 9 (10, 11) for the matching protrusions 8 on the underlying clasping rings 5, 6 in order to secure the axial movableness of the clasping rings as described before.

When segments 42, 43 are made out of plastic, the inner wall of at least one of the segments preferably has an electrically conducting strip, e.g. a metal strap 44, allowing a conductive bridge between the spring washers 12 on both sides of the sealing ring. In this way, potential electrostatic charges in one of the pipe ends 1 or 2 are discharged (or earthed) on the other pipe end through the strip 44. For that matter, the metal strip 44 may be attached to the segments 42, 43 with pins 48 that then may radially contact with a surrounding metal sleeve 7 through the wall of the segment. In this sense, a possible charge build-up also gets discharged or earthed by means of sleeve 7.

The two complementary pipe segments 42 and 43 according to figure 8 out of a plastic material, can be made through injection moulding in the same mould. This is very economical from a production-technical point of view. The mounting tooth 45 of segment 42 fits into a complementary groove in segment 43. Conversely, the mounting tooth of the twin segment 43 fits into groove 46 of segment 42.

Finally, in accordance with this invention, it is possible and even recommended to assemble the pipe joint beforehand and thus put it on the market as a pipe-joint-kit with matching cam spanners 35. The pre-assembled pipe joint (or pipe-joint-kit) then comprises sleeve 7 enclosing sealing ring 3, clasping rings 5, 6 and one or more intermediary washers 12 and auxiliary rings 13 - all in the right place, in the appropriate order and with the correct orientation as described above.

When realizing a pipe joint with this kit, the pre-assembled pipe joint will first be slid halfway over pipe end 1 (against rib 14 of the sealing ring). Subsequently, the other pipe end 2 will be slid as far as possible into the opening of the kit that is still free. Finally, as described before, the joint will be locked with the use of the cam spanners 35, by turning the clasping rings 5 and 6, resp 30 over the appropriate angle alpha in order to move the protrusions 8 through a helical path in the contouring sections 11 of the appropriate slots 9.

The pipe joint according to figure 8 is also preferably pre-assembled. In the concave inner wall of a tube segment 42, clasping rings 5, 6 with intermediary spring washers 12, auxiliary rings 13 and sealing ring 3 are placed in appropriate order. With it, protrusions on the clasping rings will be ordered in the matching notches 10 in the pipe segment. Over this, the second complementary segment 43 will be placed with the respective teeth 45 of one segment into the matching groove of the other. Around this cylindrical assembly, the cylindrical sleeve 7 is slid, which preferably has about the same length as the segments in order to consolidate the assembly into one entity. When this sleeve 7 is a metal pipe, its top edges can be turned over through rolling them into the edge groove 47. In this way, a compact pipe joint is realised, which can easily be mass-produced and assembled.

Conversely, the embodiment with pipe segments (42, 43) can have the appropriate protrusions 8 applied on their concave inner wall, in analogy with figure 6. The clasping rings 5, 6 with matching notches on their surfaces can basically look as described before in figures 5 and 6. To dismount the pipe joint according to this embodiment, after unscrewing the clasping rings 5 and 6 out of their bayonet catch, sleeve 7 will first have to be slid off the pipe segments. Next, after taking away these segments, rings 5, 12, 13, 3 and 6 are freely accessible to continue the dismantling process. In this case - and also in the embodiment according to figure 8 - sleeve 7 may be made up of two or more axially connecting pipes instead of being made up of one piece.

It is also possible to order a series of successive clasping rings, e.g. four or six, with several suitable intermediary washers 12, e.g. four resp six. Only the two outer clasping rings will have the protrusions 8 and notches 17 in their end face for locking by means of a cam spanner. The multitude of washers 12 with auxiliary rings 13 will increase the clamping force on the pipe ends on four or six instead of on two places. In this case, the length of the sleeve may be more than two times the diameter of the pipe ends. This variation is therefore especially useful for sealing under very high pressure or underpressure and/or for pipelines with large tube diameters.

### EXAMPLE

Two pipe ends 1 and 2 out of stainless steel, having a wall thickness of 1,2 mm and an outer diameter of 51 mm, were connected in a sealing way with a pre-assembled pipe joint according to figure 1. A sealing ring 3 made out of silicone rubber, clasping rings 5 and 6 out of polyacetal and a stainless steel washer 12 with a thickness of 0,2 mm were used according to figure 4 as described above. The length of the stainless steel sleeve 7 was 75 mm, its wall thickness 1,2 mm and its inner diameter 70 mm.

One of the pipe ends (pipe 1) was sealed on the outside by means of a disc welded on to it and the test joint was filled and bled with hydraulic oil at room temperature, then pressurized through the opposite opening of pipe 2. Appropriate marking strips were glued onto the pipes for measuring and registration (with a catheter) of the movement (i.e. the axial shifting away) of one of the pipe ends with regard to the other when increasing the hydraulic pressure in the joint area. The pressure was discontinuously increased with intervals of 0,2 bar and with intervals of 5 minutes at every turn.

When increasing the pressure up to 3 bar, the measured movement of the pipe ends increased practically uniformly until 0,1 mm. Afterwards, it increased a little faster until 0,2 mm at 5 bar. The movement amounted to 0,3 mm at 6 bar. At 6,6 bar, a movement of 0,4 was observed and the joint started leaking (oil loss), which caused the pressure to decrease until 4,4 bar with a steady extension of 0,42 mm.

On increasing the pressure again up to 5 bar, the joint started leaking again and with a further increase until 6,8 bar and oil leaking, the pipe ends gradually kept on drifting apart. The indentation 26 on the inner edge of the washers 12 apparently had completely lost its grip on the tube walls. In conclusion, we can state that this joint can guarantee a closure with an overpressure of 6 bar.

## Claims

1. A pipe joint for connecting two pipe ends (1, 2) in a sealing way, comprising
- a sealing ring (3) of an elastic material, with an inner diameter substantially equal to the outer diameter of the pipe ends to be coupled, which ring (3) is placed into the sealing joint of the pipe ends facing the annular junction (4) in between the end faces (20) of said pipe ends (1,2), thereby overlapping both pipe ends and with
- at least one axially moveable clasping ring (5, 6) situated near this sealing ring 3, to lock and unlock the sealing joint as well as
- means enclosing the sealing ring (3) and the clasping rings (5, 6)
wherein these means include a tubular sleeve (7) and a spring washer (12) situated in between the clasping ring (5, 6) and sealing ring (3) on both sides of the sealing ring, optionally together with adjoining auxiliary rings (13), said spring washer being axially compressible in order to secure a tight locking, and having an inner diameter which is smaller when compressed than when not compressed.

2. Pipe joint in accordance with claim 1 wherein the washer (12) is a metal ring consisting of an inner contouring section (21) and a matching outer contouring section (22) forming an obtuse angle "A" with the inner section (21), and in which both contouring sections (21, resp 22) have predominantly radial incisions (23, resp 24) on their edges.

3. Pipe joint in accordance with claim 2 wherein the inner edge of the washer ring (12) is provided with a toothed indentation (26).

4. Pipe joint in accordance with claim 1 wherein the sealing ring (3) has a central inner rib (14).

5. Pipe joint in accordance with claim 1 wherein the clasping rings (5, 6) have the same or substantially the same inner and outer diameter as the sealing ring (3).

6. Pipe joint in accordance with claim 1 wherein the outer end face (15, 16) of the respective clasping ring (5, 6) has at least one local notch (17) in order to secure the axial displaceability.

7. Pipe joint in accordance with claim 1 wherein the tubular sleeve (7) is made in one piece.

8. Pipe joint in accordance with claim 7 wherein the inner wall of the tubular sleeve (7) directly borders or contacts the outer wall of clasping rings (5, 6) and sealing ring (3).

9. Pipe joint in accordance with claim 8 wherein the axial displaceability of the clasping ring (5, 6) is produced by a helical path of one or more protrusions (8) on the outer wall of the clasping ring (5, 6) in the corresponding notches or slots (9) facing them on the inner wall of the tubular sleeve (7).

10. Pipe joint in accordance with claim 9 wherein the helical path is a bayonet catch in which the slot (9) contains a substantially axially directed section (10) stretching from the outer edge of the sleeve inwards where a transversal peripheral slot (11) connects.

11. Pipe joint in accordance with claim 1 wherein two or more complementary tubular segments (42, 43) are placed in between the inner wall of the tubular sleeve (7) on the one hand and the outer wall of the clasping rings (5, 6) and sealing ring (3) on the other hand, having on their inner wall the appropriate notches (9) for the matching protrusions (8) of the underlying clasping rings (5, 6) in order to secure the axial displaceability of the clasping ring.

12. Pipe joint in accordance with claim 11 wherein said inner wall of the segments (42, 43) has axial metal straps (44) attached to it allowing a conductive bridge between the spring washers (12) on both sides of the sealing ring.

13. A method for coupling pipe ends (1, 2) with a pipe joint in accordance with claim 1, wherein this pipe joint is pre-assembled by applying on the right place and in correct order and angle orientation the clasping ring (5), first washer (12) with auxiliary ring (13), sealing ring (3), second washer (12) with auxiliary ring and clasping ring (6); after which the pre-assembled pipe joint is slid over a pipe end (1) up to half its length; subsequently the other pipe end (2) is slid into the unengaged opening of the pre-assembled pipe joint as far as possible; after which a cam spanner (35) is pressed against both ends (15, 16) of the pipe joint with its respective cams (36-5 and 36-6) into the notches (17) and the cam spanners are suitably turned over an angle alpha in order to move the protrusions (8) into the peripheral section (11) of the matching slot (9).

14. A pre-assembled pipe joint in accordance with claim 6 containing a sleeve (7) that encloses, in the correct order, a sealing ring (3), at least one clasping ring (5, 6) and spring washers (12) with adjoining auxiliary rings (13).

15. Pre-assembled pipe joint in accordance with claim 11 wherein clasping rings (5, 6), a sealing ring (3) and intermediary washer rings (12) with auxiliary rings (13) are placed in correct order in the concave inner wall of both connecting pipe segments (42 and 43), whereby the protrusions (8) are arranged into their matching notches (9, 10) and whereby a sleeve (7) encloses the pipe segments (42, 43).

16. Pre-assembled pipe joint in accordance with claim 15 wherein the top edges (48) of the sleeve (7) are bent or folded down into the edge grooves (47) of the pipe segments.

17. Pipe joint in accordance with claim 1 containing a series of successive clasping rings (5, 6) with more than two appropriate intermediary washers (12) and auxiliary rings (13).

18. Pipe lines equipped with one or more pipe joints in accordance with claim 1.
